# EUROPEAN PATENT APPLICATION

(11) **EP 4 620 547 A1**
(43) Date of publication of application: **24.09.2025**
(21) Application number: 24195891.7
(22) Date of filing: 22.08.2024
(51) Int. Cl.: B01D 21/00, B01D 21/02, B01D 21/24, C02F 1/00

(54) **A WASTEWATER DEPOSIT FOR THE ENHANCED DEPOSITION OF RESIDUES**

(30) Priority: 19.03.2024 PT 2024119330
(71) Applicant: Ark - Indústria, Lda, 4430-059 Vila Nova de Gaia (PT)
(72) Inventor: AIRES PEREIRA COSTA, Nelson, 4430-059 VILA NOVA DE GAIA (PT)
(74) Representative: do Nascimento Gomes, Rui

(57) **Abstract**

The present disclosure is enclosed in the area of laboratory or experimental setups for water treatment, providing a deposit (10) for a miniaturized system for water treatment, particularly wastewater treatment. The deposit (10) of the present disclosure is miniaturized when compared to large scale deposits (10) which are part of wastewater treatment plants. The deposit (10) of the present disclosure provides that deposit (10) residues of such a suspension in an enhanced manner, allowing their further removal. It comprises a frustoconical portion (fp) and a curved portion (cp) forming a reservoir (11) such that, when a water suspension of residues is provided within the deposit (10), the residues aggregate in the curved portion (cp) by action of gravity and are removable through the bottom opening (12).

## Description

### FIELD OF THE DISCLOSURE

The present disclosure is enclosed in the area of miniaturized, laboratory or experimental setups for water treatment, providing a deposit for a miniaturized system for water treatment, particularly wastewater treatment. The deposit of the present disclosure is miniaturized when compared to large scale deposits which are part of wastewater treatment plants.

### PRIOR ART

Solutions are known in the art which seek to simulate the operation of wastewater treatment plants, for educational purposes.

Such solutions simulate the operation of such plants, by including contaminants which are not actual contaminants present in wastewater, and showing trainees operating or following the operation of such systems how a wastewater treatment plant would work.

These systems are not functional and do not allow to actually treat water, at least no more than removing dummy elements from water or showing by different means how a wastewater treatment plant would work in reality.

Thus, they do not require that their components actually operate in order to treat wastewater.

Wastewater typically consists of a mixture of water with different types of contaminants, some of which are in suspension in the water. The deposit of the present disclosure provides that deposit residues of such a suspension in an enhanced manner, allowing their further removal.

### SUMMARY OF THE DISCLOSURE

The present disclosure comprises a wastewater deposit for the enhanced deposition of residues, the deposit having a main reservoir with a top opening and a bottom opening, the reservoir having a frustoconical portion of polyhedric and/or circular cross section and a curved portion, wherein a top of the frustoconical portion forms the top opening, and a bottom of the curved portion forms the bottom opening, the bottom of the frustoconical portion connecting to the top of the curved portion forming a continuous wall of the reservoir, wherein
the top of the frustoconical portion is wider than the bottom of such portion,
the curved portion tapers between its top and bottom forming a curved wall of the reservoir, and such that its top is wider,

and the frustoconical portion has an opening formed in its wall suitable for forming a water outlet,
wherein, when a water suspension of residues is provided within the deposit, the residues aggregate in the curved portion by action of gravity and are removable through the bottom opening and the total volume of the reservoir is of 4-50 l.

For a total volume of the reservoir, the volume of the curved portion may be between 1/8 and 1/6 of the total volume.

A first tangent to the wall of the reservoir in the top of the curved portion may form a first angle α of 70-85° with an imaginary central axis of the wastewater deposit formed between the center of the top opening of the frustoconical portion and the center of the bottom opening of the curved portion and a second tangent to the wall of the reservoir in the bottom of the curved portion may form a second angle β of 40-50° with the imaginary central axis.

The sides of the frustoconical portion formed between its top and bottom may form a 2-4° angle θ with an imaginary central axis of the wastewater deposit formed between the center of the top opening of the frustoconical portion and the center of the bottom opening of the curved portion.

The width of the top opening of the frustoconical portion may be between 150 and 500 mm, and/or the width of the bottom opening of the curved portion may be between 30 and 80 mm.

The bottom opening of the curved portion may be centrally provided in relation to the walls of the reservoir.

The reservoir may be composed of polycarbonate. The reservoir may specifically be composed of crystalline polycarbonate.

The reservoir may have one or more additional side openings, the additional side openings being formed in the frustoconical portion and being suitable to provide an inlet for a water suspension or a sensor.

The one or more additional side openings may have a width which corresponds to the width of a normalized watertight coupling to provide an inlet for a water suspension or a sensor.

The deposit may further comprise vertical column coupling means, comprising a bottom facing recess formed from the top opening of the frustoconical portion and along an external part of the frustoconical portion, suitable for the coupling to a vertical column.

The top opening of the frustoconical portion may be closed, forming a top surface of the reservoir.

The top opening of the frustoconical portion may have coupling means suitable for a cover to be coupled.

The coupling means may be bayonet coupling means, suitable for a cover to be rotatably coupled to the deposit.

The present disclosure may further comprise a water deposit system for the enhanced deposition of residues, the system comprising the wastewater deposit of the present disclosure while comprising coupling means and a cover, the cover comprising coupling means which are corresponding to the coupling means of the wastewater deposit.

The deposit may specifically comprise bayonet coupling means, the coupling means of the cover being bayonet coupling means, the cover being rotatably coupled to the deposit.

The cover may have one or more openings, the one or more side openings being suitable to provide a water inlet or a sensor and, optionally, the one or more side openings having a width which corresponds to the width of a normalized watertight coupling to provide a water inlet or a sensor.

The cover may be formed by a first cover section and a second cover section, wherein the first cover section comprises coupling means and the second cover section comprises no coupling means, wherein the second cover section is rotatably coupled to the first cover section, whereby the second cover section is movable, providing an opening in the deposit through the top opening of the frustoconical portion, when the first cover section is coupled to the deposit.

The present disclosure may further comprise a worktop wastewater deposit assembly comprising the wastewater deposit system of the present disclosure, a worktop and a vertical column,
the vertical column being fixedly coupled to the worktop, and
the wastewater deposit comprising vertical column coupling means, comprising a bottom facing recess formed from the top opening of the frustoconical portion and along an external part of the frustoconical portion, a top facing coupling portion of the vertical column being provided within the bottom facing recess of the deposit, thereby coupling the deposit to the vertical column.

### DESCRIPTION OF DRAWINGS

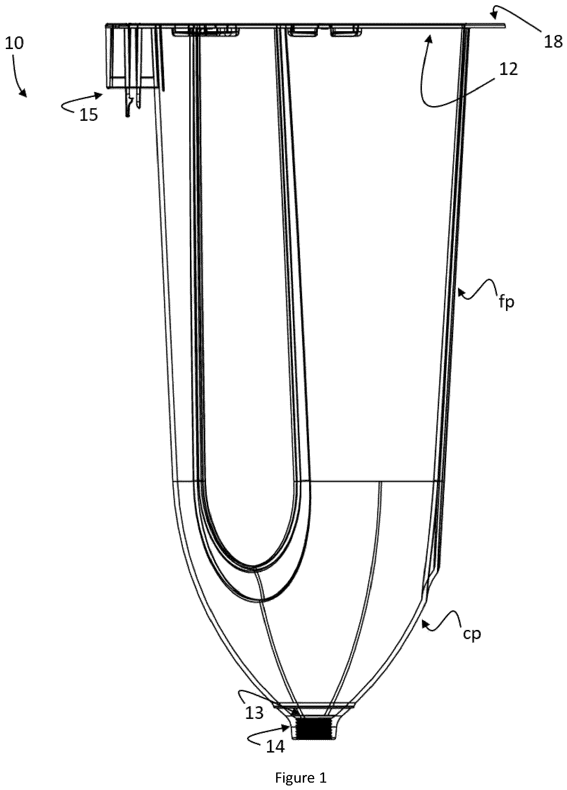

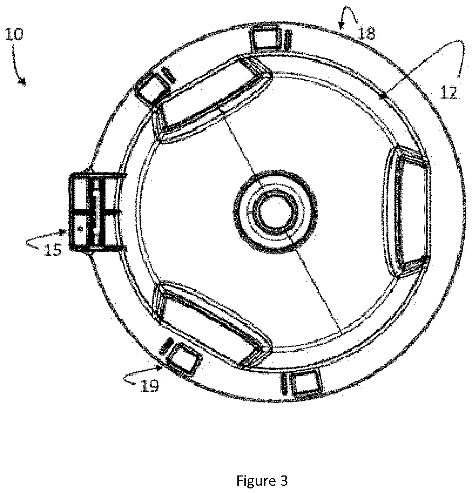

Figure 1 - a longitudinal cross-section representation of a wastewater deposit (10) according to the present disclosure. The deposit (10) comprises a reservoir (11) with a top opening (12) and a bottom opening (13), a neck (14) with an internal thread protruding from the bottom opening (13). The reservoir (11) has a frustoconical portion (fp), which tapers from the top opening (12) until a continuous connection with the curved portion (cp). The frustoconical portion (fp) is composed, i.e., it has a substantial polyhedric form, with sides which are curved and sides which are plane. This arrangement is better observable in figure 3. Adjacent to the top opening (12) is formed a flange (18) which projects from the side wall of the reservoir (11). From such flange (18), and represented in the left top portion of the figure, are provided vertical column coupling means (15), suitable to couple to a vertical column.

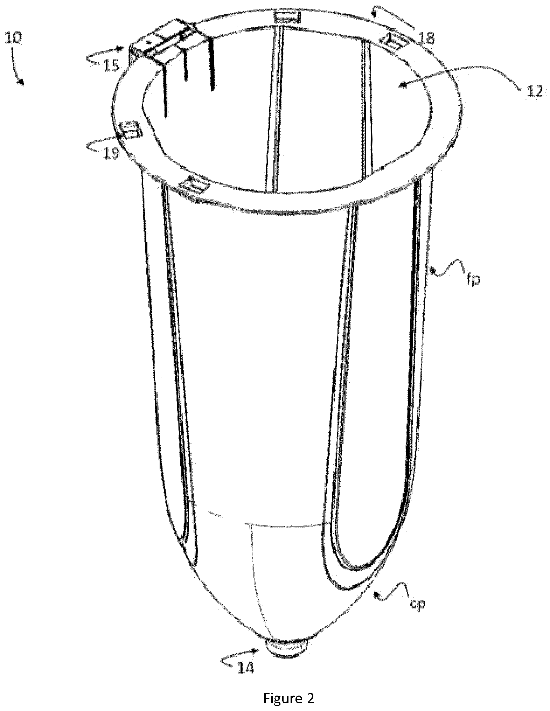

Figure 2 - a side view representation of a wastewater deposit (10) according to the present disclosure. The scale (16) is shown.
Figure 3 - a top view representation of a wastewater deposit (10) according to the present disclosure.

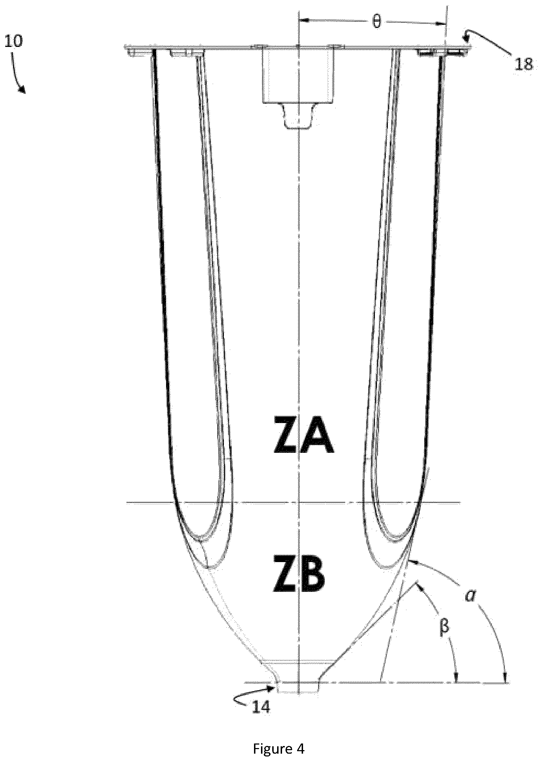

Figure 4 - a side view representation of a wastewater deposit (10) according to the present disclosure. The frustoconical portion (fp) corresponds to the area represented as ZA or Zone A. The curved portion (cp) corresponds to the area represented as ZB or Zone B. The dashed line consists of an imaginary line which divides Zone A (ZA) from Zone B (ZB), and which corresponds to the continuous connection between the frustoconical portion (fp) and the curved portion (cp). The angle α formed between the tangent to the side wall in the top of the curved portion (cp) and a perpendicular to the central axis is represented. The β angle formed between the tangent to the side wall in the bottom of the curved portion (cp) and a perpendicular to the central axis is also represented. The width of the neck (14) may be between 15 and 40 mm, for instance 22 mm. The total height of the deposit (10), including a neck (14), may be of 430,00 mm. A height of the frustoconical portion (fp) may be of 302,35 mm. The side opening (16) formed on the bottom left side of the frustoconical portion (fp) is suitable to provide a water outlet. The two other additional side openings (16) are suitable to provide a water inlet and a sensor (such as a water level sensor. The sides of the top opening (12) of the frustoconical portion (fp) may form a flange.

### DETAILED DESCRIPTION

The deposit (10) of the present disclosure has a reservoir (11) with a frustoconical portion (fp) and a curved portion (cp). When a water suspension of residues is provided within the deposit (10), gravity acts on such ensemble, and both water and residues are pulled by gravity. Those residues which are denser than water will aggregate in the bottom of the reservoir (11).

The combined shape of the deposit (10) of the present disclosure, particularly of its reservoir (11), allows that not only those residues aggregate in the bottom, but also that they aggregate faster, due to the shape of the deposit (10).

The reservoir (11) is transparent such that a user can see the inside of the reservoir (11). To such end, it may be composed of polycarbonate, particularly crystalline polycarbonate.

As the residues aggregate in the curved portion (cp) by action of gravity, they are removable through the bottom opening (12). Towards such end, a water outlet control element - such as a controllable valve - may be coupled to the bottom opening (12). Such valve may consist of a manually controllable valve or an electronically controllable valve.

The deposit (10) may further comprise a neck (14) protruding from the bottom opening (13) of the curved portion (cp), as represented in figures 1-4. A water outlet control element such as a controllable valve may be coupled to the neck (14). Such connection may be provided through a tubing which connects the neck (14) to such valve. To such end, the neck (14) may have an internally provided thread as provide in figure 1, allowing a rotatable coupling to the tubing/valve.

In addition, after the denser residues have deposited in the end of the reservoir (11), cleaner water may be removed through the side opening (16). The side opening (16) may be provided on the frustoconical portion (fp).

A scale (16) may be provided on the wall of the reservoir (11), indicating several values of the volume of the reservoir (11).

The total volume of the reservoir (11) is of 4-50 l. Such volume defines the capacity that the reservoir (11) can withhold, i.e., the content providable within the reservoir (11), which may include water to be treated, is of 4-50 l. Optionally, the volume is of 4-20 l. Optionally, the volume is of 5-20 l. optionally, the volume is of 5-15 l.

As represented in the figures, the aggregation of residues in the curved portion (cp) by action of gravity is enhanced when the reservoir (11) is provided in an upright position, i.e., when an imaginary central axis - an imaginary axis provided centrally as regards the frustoconical portion (fp) and the curved portion (cp), thus also crossing the center of the bottom opening (12) -, is aligned with the gravity vector.

The frustoconical portion (fp), as referred, may be of polyhedric and/or circular cross section. As provided in the figures, the frustoconical may be of a composed configuration, having a substantially polyhedric format, with sides which are plane and sides which are circular. Such configuration is best observable in figure 3. In such case, there are three plane sides and three circular sides. The side openings (16) which are e.g. suitable for sensor installation may be provided in plane sides, such that installation of a corresponding sensor or inlet/outlet is simpler.

In association with the top opening (12) of the reservoir (11), a flange (18) may be provided. The flange (18) provides a perpendicular extension as regards a reservoir (11) wall, as of figure 1. The flange (18) enables a connection with elements such as a cover for the top opening (12) and a vertical column.

Also associated with the reservoir (11) wall, vertical column coupling means (15), for instance as of figure 1, may be provided. Still following figure 1, vertical column coupling means (15) allow to couple the deposit (10) to a vertical column. The vertical column coupling means (15) comprise a bottom facing recess formed from the top opening (12) of the frustoconical portion (fp) and along an external part of the frustoconical portion (fp), a top facing coupling portion of the vertical column being provided within the bottom facing recess of the deposit (10), thereby coupling the deposit (10) to the vertical column. The vertical column coupling means (15) are formed as a single piece together with the reservoir (11), projecting from its wall.

The coupling means provided in the deposit may be coupling means (19) suitable for bayonet coupling, i.e. suitable for a cover to be rotatably coupled to the deposit. Such coupling means (19) may be provided in the flange (18), comprising slots formed along the flange which projections formed in a corresponding cover engage with, in a bayonet coupling. Such coupling means are represented in figure 3.

The present disclosure may further comprise a water deposit system for the enhanced deposition of residues, the system comprising the wastewater deposit of the present disclosure while comprising coupling means and a cover, the cover comprising coupling means which are corresponding to the coupling means of the wastewater deposit.

The deposit may specifically comprise bayonet coupling means, the coupling means of the cover being bayonet coupling means, the cover being rotatably coupled to the deposit.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. A wastewater deposit (10) for the enhanced deposition of residues, the deposit (10) having a main reservoir (11) with a top opening (12) and a bottom opening (12), the reservoir (11) having a frustoconical portion (fp) of polyhedric and/or circular cross section and a curved portion (cp), wherein a top of the frustoconical portion (fp) forms the top opening (12), and a bottom of the curved portion (cp) forms the bottom opening (12), the bottom of the frustoconical portion (fp) connecting to the top of the curved portion (cp) forming a continuous wall of the reservoir (11), wherein
the top of the frustoconical portion (fp) is wider than the bottom of such portion,
the curved portion (cp) tapers between its top and bottom forming a curved wall of the reservoir (11), and such that its top is wider,
and the frustoconical portion (fp) has an opening formed in its wall suitable for forming a water outlet,
wherein, when a water suspension of residues is provided within the deposit (10), the residues aggregate in the curved portion (cp) by action of gravity and are removable through the bottom opening (12), and the total volume of the reservoir (11) is of 4-50 l.

2. A wastewater deposit (10) according to the previous claim wherein, for a total volume of the reservoir (11), the volume of the curved portion (cp) is between 1/8 and 1/6 of the total volume.

3. A wastewater deposit (10) according to the previous claim wherein a first tangent to the wall of the reservoir (11) in the top of the curved portion (cp) forms a first angle α of 70-85° with an imaginary central axis of the wastewater deposit (10) formed between the center of the top opening (12) of the frustoconical portion (fp) and the center of the bottom opening (12) of the curved portion (cp) and a second tangent to the wall of the reservoir (11) in the bottom of the curved portion (cp) forms a second angle β of 40-50° with the imaginary central axis.

4. A wastewater deposit (10) according to any of the preceding claims wherein the sides of the frustoconical portion (fp) formed between its top and bottom form a 2-4° angle θ with an imaginary central axis of the wastewater deposit (10) formed between the center of the top opening (12) of the frustoconical portion (fp) and the center of the bottom opening (12) of the curved portion (cp).

5. A wastewater deposit (10) according to any of the preceding claims wherein the width of the top opening (12) of the frustoconical portion (fp) is between 150 and 500 mm, and/or the width of the bottom opening (12) of the curved portion (cp) is between 30 and 80 mm.

6. A wastewater deposit (10) according to any of the preceding claims wherein the bottom opening (12) of the curved portion (cp) is centrally provided in relation to the walls of the reservoir (11).

7. A wastewater deposit (10) according to any of the preceding claims wherein the reservoir (11) is composed of polycarbonate, optionally the reservoir (11) being composed of polycarbonate.

8. A wastewater deposit (10) according to any of the preceding claims wherein the reservoir (11) has one or more additional side openings (16), the additional side openings (16) being formed in the frustoconical portion (fp) and being suitable to provide an inlet for a water suspension or a sensor, optionally wherein the one or more additional side openings (16) have a width which corresponds to the width of a normalized watertight coupling to provide an inlet for a water suspension or a sensor.

9. A wastewater deposit (10) according to any of the preceding claims wherein it further comprises vertical column coupling means (15), comprising a bottom facing recess formed from the top opening (12) of the frustoconical portion (fp) and along an external part of the frustoconical portion (fp), suitable for the coupling to a vertical column.

10. A wastewater deposit (10) according to any of the preceding claims wherein the top opening (12) of the frustoconical portion (fp) is closed, forming a top surface of the reservoir (11).

11. A wastewater deposit (10) according to any of the claims 1-9 wherein the top opening (12) of the frustoconical portion (fp) has coupling means suitable for a cover to be coupled, optionally the coupling means being bayonet coupling means, suitable for a cover to be rotatably coupled to the deposit (10).

12. A water deposit (10) system for the enhanced deposition of residues, the system comprising the wastewater deposit (10) of the previous claim and a cover, the cover comprising coupling means which are corresponding to the coupling means of the wastewater deposit (10).

13. A water deposit (10) system according to the previous claim, the deposit (10) being that of claim 11 and the coupling means of the cover being bayonet coupling means, the cover being rotatably coupled to the deposit (10).

14. A water deposit (10) system according to any of the claims 12-13 wherein the cover has one or more openings, the one or more side openings (16) being suitable to provide a water inlet or a sensor and, optionally, the one or more side openings (16) having a width which corresponds to the width of a normalized watertight coupling to provide a water inlet or a sensor and/or wherein the cover is formed by a first cover section and a second cover section, wherein the first cover section comprises coupling means and the second cover section comprises no coupling means, wherein the second cover section is rotatably coupled to the first cover section, whereby the second cover section is movable, providing an opening in the deposit (10) through the top opening (12) of the frustoconical portion (fp), when the first cover section is coupled to the deposit (10).

15. A worktop wastewater deposit (10) assembly comprising the wastewater deposit (10) system of any of the claims 12-14, a worktop and a vertical column,
the vertical column being fixedly coupled to the worktop, and
the wastewater deposit (10) comprising vertical column coupling means (15), comprising a bottom facing recess formed from the top opening (12) of the frustoconical portion (fp) and along an external part of the frustoconical portion (fp), a top facing coupling portion of the vertical column being provided within the bottom facing recess of the deposit (10), thereby coupling the deposit (10) to the vertical column.
